(19) Europäisches Patentamt
European Patent Office
Office européen des brevets

(11) **EP 4 645 065 A1**

(12) **EUROPÄISCHE PATENTANMELDUNG**

(43) Veröffentlichungstag:
05.11.2025 Patentblatt 2025/45

(21) Anmeldenummer: 24173472.2

(22) Anmeldetag: 30.04.2024

(51) Internationale Patentklassifikation (IPC):
*G06F 7/544* (2006.01)     *G06F 30/337* (2020.01)

(52) Gemeinsame Patentklassifikation (CPC):
**G06F 7/544; G06F 30/3312; G06F 30/337;
G06F 30/373; G06F 30/38;** G06F 2119/12

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Deutsches Zentrum für Luft- und
Raumfahrt e.V.
53227 Bonn (DE)**

(72) Erfinder:
• **Wetzel, Lucas**
**89081 Ulm (DE)**
• **Köppel, Sven**
**89081 Ulm (DE)**
• **Ulmann, Bernd**
**89081 Ulm (DE)**

(74) Vertreter: **noventive Patentanwaltsgesellschaft
mbH
Riesstraße 16
80992 München (DE)**

(54) **VERFAHREN ZUR ERMITTLUNG EINER ALTERNATIVSCHALTUNG**

(57)     Verfahren (100), insbesondere computer-implementiert, zur Ermittlung (130) einer Alternativschaltung (5), insbesondere zur Reduktion des Einflusses zeitverzögerter Terme (T1, T2, T3) in Rechenschaltungen (1), insbesondere in Rechenschaltungen (11, 12, 13) für das Lösen von Differentialgleichungen, aufweisend die Schritte:
• eines Ermittelns (110) von Zeitverzögerungen ($\tau$1, $\tau$2, $\tau$3) von Signalen (s1, s2, s3) in einer Rechenschaltung (1);
• eines Ermittelns (130) einer Alternativschaltung (5) in der Rechenschaltung (1) derart, um Zeitverzögerungen ($\tau$1, $\tau$2, $\tau$3) zu reduzieren.

Fig. 1

**Beschreibung**

Die Erfindung betrifft ein Verfahren zur Ermittlung einer Alternativschaltung. Die Erfindung betrifft ein Verfahren zur mindestens teilweisen Reduktion von mindestens einer Zeitverzögerung. Die Erfindung betrifft eine Rechenschaltung. Die Erfindung betrifft eine Recheneinrichtung. Die Erfindung betrifft ein Computerprogrammprodukt. Die Erfindung betrifft eine analoge Recheneinrichtung. Die Erfindung betrifft eine analog-digitale Hybridrecheneinrichtung. Die Erfindung betrifft eine Speichereinrichtung. Die Erfindung betrifft ein elektronisches Signal.

Im Stand der Technik sind analoge Rechnerarchitekturen wie auch analog-digitale Hybridrechnerarchitekturen bekannt. Rechnerarchitekturen können auch durch den Begriff der Recheneinrichtung beschrieben werden. Die US5237514 beschreibt dabei Verfahren zur Reduzierung von einer Cycle-Time zur Verbesserung einer Maschinenleistung. Dabei geht es um strategische Entscheidungen zur Platzierung und Partitionierung, für die Konfiguration von analogen Schaltungen oder Computern, um Schaltungen herstellen zu können. Die US7804760B2 beschreibt ein Verfahren und ein System zur Signal-Emulation, das analoge Signalverarbeitung mit dem Schwerpunkt auf passiven Filtern oder Verzögerungsschaltungen anwenden kann. Die US7336729B2 beschreibt die Verarbeitung digitaler Signale in Analog-zu-Digital-Wandlern.

Die Nachteile dieser Technologien bestehen insbesondere darin, dass sie oft auf spezifische Anwendungsfälle beschränkt sind und dabei keine Flexibilität für einen Einsatz ermöglichen.

Die Aufgabe der Erfindung besteht darin die Fähigkeiten der beschriebenen Rechnerarchitekturen auszuweiten und dabei eine Flexibilität ihres Einsatzes zu erweitern, insbesondere um Rechenoperationen in analogen und/oder analog-digitalen Hybridrechnerarchitekturen zu verbessern, insbesondere auch was die Performance, Rechengenauigkeit als auch die Zuverlässigkeit betrifft.

Die Aufgabe wird gelöst durch ein Verfahren gemäß Anspruch 1. Die Aufgabe wird gelöst durch ein Verfahren gemäß Anspruch 5. Die Aufgabe wird gelöst durch eine Rechenschaltung gemäß Anspruch 8. Die Aufgabe wird gelöst durch eine Recheneinrichtung gemäß Anspruch 9. Die Aufgabe wird gelöst durch ein Computerprogrammprodukt gemäß Anspruch 10. Die Aufgabe wird gelöst durch eine analoge Recheneinrichtung gemäß Anspruch 11. Die Aufgabe wird gelöst durch eine analog-digitale Hybridrecheneinrichtung gemäß Anspruch 11. Die Aufgabe wird gelöst durch eine Speichereinrichtung gemäß Anspruch 12. Die Aufgabe wird gelöst durch ein elektronisches Signal gemäß Anspruch 13.

Vorteilhafte Ausführungsformen der Erfindung sind Gegenstand der abhängigen Ansprüche, der Beschreibung und der Figuren. Merkmale, Merkmalskombinationen, technische Effekte und Vorteile, die im Zusammenhang mit dem Verfahren zur Ermittlung einer Alternativschaltung und/oder dem Verfahren zur mindestens teilweisen Reduktion von mindestens einer Zeitverzögerung beschrieben sind, gelten auch für die Rechenschaltung, die Recheneinrichtung, das Computerprogrammprodukt, die analoge Recheneinrichtung, die analog-digitale Hybridrecheneinrichtung, die Speichereinrichtung und/oder das elektronische Signal. Dies gilt auch umgekehrt, so dass im Hinblick auf die Offenbarung der einzelnen Aspekte der Erfindung stets wechselseitig Bezug genommen wird bzw. werden kann, insbesondere unabhängig von der beschriebenen und/oder beanspruchten Kategorie.

Gemäß einem Aspekt wird die Aufgabe durch ein Verfahren mit den Merkmalen des Anspruchs 1 gelöst.

Dabei kann ein Verfahren insbesondere computer-implementiert ausgebildet sein. Es kann zur Ermittlung einer Alternativschaltung ausgebildet sein, insbesondere zur Reduktion des Einflusses zeitverzögerter Terme in Rechenschaltungen. Diese Rechenschaltungen können insbesondere Rechenschaltungen für das Lösen von Differentialgleichungen sein. Das Verfahren kann dabei den Schritt eines Ermittelns von Zeitverzögerungen von Signalen in einer Rechenschaltung aufweisen. Das Verfahren kann dabei den Schritt eines Ermittelns einer Alternativschaltung in der Rechenschaltung aufweisen, insbesondere derart, um Zeitverzögerungen zu reduzieren.

Dabei kann der Begriff einer Alternativschaltung sich von dem Begriff eines Ausgleichs (im Sinne einer Ausgleichsschaltung) bzw. dem Begriff einer Kompensation (in Bezug auf eine Alternativschaltung) dadurch unterscheiden, dass unter den letzten beiden genannten Begriffen Zeitverzögerungen eines Signals zusammengefasst werden, die dadurch "ausgeglichen" oder "kompensiert" werden können, dass ein anderes abhängiges Signal auch entsprechend verzögert wird. Das ist hier insbesondere nicht vorgesehen. Vielmehr soll -zusätzlich oder alternativ- die Rechenschaltung während der Konfiguration der Signalwege zwischen den (örtlich fixierten) Rechenelementen so geschehen, dass die Zeitverzögerungen die Funktion nicht oder möglichst wenig beeinträchtigen.

Ein computer-implementiertes Verfahren zur Ermittlung einer Alternativschaltung kann dabei in Form eines Programms oder einer Software auf einem Computer ausgeführt werden, der entweder eine Analogrecheneinrichtung, eine analog-digitale Hybridrecheneinrichtung oder eine Digitalrecheneinrichtung darstellen kann. Das Verfahren beinhaltet insbesondere einen Schritt zur Ermittlung von Zeitverzögerungen in einer Rechenschaltung sowie die Bestimmung einer Alternativschaltung innerhalb der Rechenschaltung, um diese Zeitverzögerungen reduzieren zu können.

Dabei kann ein Reduzieren bzw. eine Reduktion auf eine alternative Ausführungsform einer Schaltung bezogen sein, die implementiert sein könnte, um dadurch ein entsprechendes Problem lösen zu können. Dies umfasst insbesondere Fälle, in denen mindestens eine alternative Verschaltung in einem Pool von Rechenelementen vorgesehen sein kann.

Eine Analogrecheneinrichtung ist insbesondere eine Schaltungsanordnung, die analoge Bauelemente, wie beispielsweise (anwendungsabhängig) ausgewählt aus der Gruppe von Schaltern, Integratoren, Komparatoren, Koeffizienten, Multiplizierern und/oder Widerständen, um nur einige exemplarisch aufzuführen, aufweist und zum Beispiel in Anwendungen mit analoger Signalverarbeitung eingesetzt werden kann. Eine analog-digitale Hybridrecheneinrichtung kombiniert insbesondere digitale und analoge Komponenten, um eine Vielzahl von Funktionen abzubilden, insbesondere einschließlich der Analyse und Verarbeitung von analogen Signalen. Bei einem analogen, wie auch einem analog-digitale Hybridrecheneinrichtung sind insbesondere die Bauelemente nicht fest verschaltet, sondern können anwendungsabhängig miteinander kombiniert werden.

Eine Analogrecheneinrichtung (entsprechend auch für analog-digitale Hybridrecheneinrichtung) ist dabei insbesondere ausgebildet, um eine mathematische Problemstellung in Analogie (in der Verschaltung der elektronischen Elemente) abzubilden. Dabei können analoge Rechenelemente miteinander kombiniert werden, um durch deren mathematische Beschreibung das zu lösende mathematische Problem, beispielsweise eine Differentialgleichung, zu lösen. Dabei kann es also Analogieschaltkreise geben, die entsprechend das zu lösende Problem analog abbilden, wie etwa Verzögerungsdifferentialgleichungen. Dabei können Zeitverzögerungsterme insbesondere unerwünschte Terme in der mathematischen Beschreibung (auch als Modellierung zu bezeichnen) der Analogieschaltung darstellen, die das zu lösende mathematische Problem lösen sollte, aber ggf. durch die physikalisch (messbaren) Zeitverzögerungen dazu führen kann, dass die Problemstellung nicht korrekt abgebildet werden kann. Vielmehr kann eine andere mathematische Beschreibung der fälschlicherweise implementierten Analogieschaltung ein anderes mathematisches Problem abbilden. Durch die hier und an anderer Stelle beschriebenen Verfahren kann dieser Implementierung der falschen Analogieschaltung entgegengewirkt werden.

Die Vorrichtungen können dabei insbesondere auch bei der Berechnung von Differentialgleichungen zum Einsatz kommen. Durch das hier beschriebene Verfahren kann dem Effekt entgegengewirkt werden, dass sich bei Rechenschaltungen analoger Recheneinrichtungen (Computer) die sich über viele Elemente und damit über große komplexe elektronische Schaltungen erstrecken, die Signale erhebliche Zeitverzögerungen akkumulieren können. Diesen Zeitverzögerungen liegen unter anderem Verarbeitungszeiten elektronischer Elemente, wie z.B. Operationsverstärker, Kapazitäten gepaart mit Widerständen und die Übertragungszeiten der Leiterbahnen, zugrunde.

In Analogrecheneinrichtungen (auch als Analogrechner zu bezeichnen) und analog-digitale Hybridrecheneinrichtungen (auch als analog-digital Hybridrechner zu bezeichnen) basieren Berechnungen insbesondere auf der Konfiguration von Analogieschaltungen, welche das zu lösende Problem - also etwa die zu lösende Differentialgleichung - widerspiegeln, bzw. in Analogie darstellen können.

Sollen nun mathematische Problemstellungen, wie z.B. gewöhnliche Differentialgleichungen gelöst werden, dann kann entgegengewirkt werden, dass derartige Zeitverzögerungen unter Umständen zum Problem werden können.

Dies gilt insbesondere wenn die Zeitverzögerungen nicht vernachlässigbar sind, sondern von der Größenordnung der charakteristischen Zeit sind, auf denen die Dynamik der Schaltungssignale stattfindet, die sich aus der Verarbeitungszeit der mathematischen Problemstellungen, die zu berechnen sind, ergibt. Dadurch können aus mathematischen Problemstellungen durch die zeitverzögerten Glieder oder Anteile, auch Zeitverzögerungsterme genannt, z.B. Delay-Differentialgleichungen statt gewöhnlicher Differentialgleichungen werden. Mit anderen Worten, die Rechenschaltung kann das zu lösende Problem im Analogen nicht mehr korrekt darstellen. Bei den hier und an anderer Stelle beschriebenen Zeitverzögerungen handelt es sich insbesondere nicht um "cycle times", wie sie in Bezug auf Rechenzyklen oder Prozessorentaktungen verwendet werden können. Zeitverzögerungen von Signalen können dabei beispielsweise durch den Lauf durch Leiterbahnen und/oder (elektrische) Bauteile erfolgen.

Das ist insbesondere dann der Fall, wenn die Zeitverzögerungen nicht vernachlässigbar sind.

Um zu bestimmen welche Zeitverzögerungen nicht vernachlässigt werden können, können die Zeitskalen, auf denen die Dynamik der Rechnung stattfinden kann mit denen der zu erwartenden akkumulierten Zeitverzögerungen innerhalb der analogen Rechenschaltung verglichen werden.

Beim Ermitteln von Zeitverzögerungen in einer Rechenschaltung werden insbesondere die zeitlichen Verzögerungen von Signalen innerhalb der Schaltung bestimmt. Eine Rechenschaltung bezieht sich insbesondere auf eine Anordnung von Bauelementen und Verbindungen, die dazu dienen kann, mathematische Operationen auszuführen, z.B. bei der Lösung von Differentialgleichungen.

Als Beispiel können hier etwa Rechenschaltungen, die eine periodische Lösung mit einer Frequenz $f$ erzeugen, angenommen werden. Das zu lösende mathematische Problem könnte z.B. folgende Form haben

$$\mathrm{d}^2 y(t)/\mathrm{d}t^2 = -y(t). \qquad\qquad [1]$$

Erfährt nun das physikalische Signal y in der Analogieschaltung eine Zeitverzögerung $\tau$, dann berechnet die Analogrechenschaltung/Analogieschaltung insbesondere folgende Gleichung

$$d^2 y(t)/dt^2 = -y(t - \tau).$$ [2]

Die Lösung der Gleichung in Formel [1] hat die Form

$$y(t) = c2^* sin(t) + c1^* cos(t).$$ [3]

Diese ist verschieden zur Lösung der Gleichung der Formel [2], mit der Form

$$y(t) = c^* \exp[(2/\tau)^* W(-\tau/2)t],$$ [4]

wobei W eine Lambert W-Funktion repräsentiert. Die konfigurierte Rechenschaltung, die die Formel [1] abbilden soll, würde mit $\tau > 0$ nicht das gewünschte Ergebnis liefern.

Die Alternativschaltung ist insbesondere eine Schaltungsausführung die innerhalb der möglichen äquivalenten Rechenschaltungen dazu dienen kann, mindestens teilweise die Zeitverzögerungen in der Rechenschaltung zu reduzieren. Die Rechenelemente sitzen insbesondere verteilt über den analog-digital Hybridrechner und können in verschiedensten Permutationen untereinander verbunden werden. Dabei gibt es viele Möglichkeiten das zu bearbeitende Problem abzubilden - aus diesen kann nun diejenige ausgewählt werden, die die kleinsten Signallaufzeiten/Zeitverzögerungen aufweist. Durch die Anwendung dieser Alternativschaltung ist es möglich, dass Zeitverzögerungen reduziert werden können, sodass bei der Lösung von Problemen das richtige Ergebnis berechnet wird bzw. das richtige Problem gelöst wird. So kann bspw. bei der Berechnung von Differentialgleichungen die in der Recheneinrichtung abgebildete Differentialgleichung richtig berechnet werden und nicht eine, die durch die Zeitverzögerung zu einem falschen Ergebnis führt.

Nach einem Aspekt kann das Verfahren den Schritt eines Entscheidens bzgl. der Relevanz der ermittelten Zeitverzögerungen für eine Rechenoperation der Rechenschaltung aufweisen, um zu entscheiden, ob das Ermitteln einer Alternativschaltung durchzuführen ist.

Der Schritt des Entscheidens bzgl. der Relevanz der ermittelten Zeitverzögerungen beinhaltet insbesondere die Überprüfung der ermittelten Zeitverzögerungen in Bezug auf ihre Bedeutung für die Rechenoperationen der Recheneinrichtung. Die Zeitverzögerung ist insbesondere dann relevant, wenn sie nicht deutlich kleiner ist als die Zeitskala der Rechenoperationen der Recheneinrichtung bzw. der Rechenschaltung.

Wenn eine ermittelte Zeitverzögerung als relevant anzunehmen ist bzw. so eingestuft wird, dann kann in Betracht gezogen werden, ob eine Alternativschaltung berechnet werden soll, um die Zeitverzögerungen zu reduzieren. Wenn eine ermittelte Zeitverzögerung nicht als relevant anzunehmen ist bzw. nicht so eingestuft wird, werden insbesondere keine weiteren Schritte für die Ermittlung einer Alternativschaltung durchgeführt.

Indem nur dann eine Alternativschaltung ermittelt wird, wenn die Zeitverzögerungen zu Schwierigkeiten bei der Berechnung führen könnten, etwa bei der Berechnung von Differentialgleichungen, kann eine effiziente Nutzung der Ressourcen und Rechenoperationszeit erreicht werden.

Durch die Anwendung des Verfahrens ist es möglich, dass das Ergebnis einer Berechnung korrekt ist, indem mindestens teilweise der Einfluss von zeitverzögerten Termen auf die Rechenschaltung reduziert wird. Dies kann aber entsprechend nur dann erfolgen, wenn dies nicht zu einer entsprechenden Mehrbelastung führt, ohne einen entsprechenden Nutzen aufzuweisen, etwa weil ein Fehler zu vernachlässigen wäre oder gar nicht erst entstünde.

Nach einem Aspekt kann das Ermitteln von Zeitverzögerungen mindestens eines von einem Approximieren, einem Berechnen oder einem Messen aufweisen. Damit können aufgrund bekannter Bauteile und der räumlichen Anordnung dieser (relativ zueinander) Signallaufzeiten und bauteilbedingte Zeitverzögerungen approximiert, berechnet und/oder gemessen werden.

Ein Approximieren bzw. eine Approximation bedeutet insbesondere eine Näherung. Dabei können Zeitverzögerungswerte beispielsweise approximativ ermittelt, also näherungsweise bestimmt werden. Eine Annäherung kann zum Beispiel eine komplizierte Berechnung durch eine weniger komplizierte ersetzen. Das Approximieren kann dabei Teil eines Berechnens sein, bei dem eine Recheneinrichtung anhand eines Modells etwa einer Rechenschaltung entsprechende Varianten von Alternativschaltungen ermitteln kann. Ein Messen kann dabei insbesondere auf einem echten physischen Messen von Signalübertragungswerten beruhen.

Die Rechenschaltung ist insbesondere ein Teil des digitalen, analogen und/oder digital-analogen Systems, das dazu dient, Signale zu verarbeiten und Berechnungen durchzuführen. Dabei sind die Zeitverzögerungen von Signalen von entscheidender Bedeutung, da sie bestimmen, wie schnell eine Berechnung ausgeführt wird. Eine analog-digitale Hybridrechnerarchitektur ist eine Kombination aus analogen und digitalen Rechenschaltungen, bei der die Vorteile beider Technologien genutzt werden kann.

Bei solchen Systemen können die Zeitverzögerungen für zu übermittelnde Signale durch die hierin beschriebenen Verfahren, Vorrichtungen und Systeme sorgfältig ausgewählt werden, um sicherzustellen, dass sie keine oder möglichst geringe Auswirkungen auf das Ergebnis der Berechnung haben. Eine Möglichkeit besteht darin, eine Alternativschaltung zu verwenden, die dazu dient, die Zeitverzögerungen zu reduzieren. Diese Zeitverzögerungen können durch Approximieren, Berechnen oder Messen ermittelt werden.

Insgesamt bietet eine analog-digitale Hybridrechenarchitektur eine Möglichkeit, die Vorteile beider Technologien zu nutzen und damit effizientere und genauere Rechenoperationen durchzuführen. Dafür können die Zeitverzögerungen sorgfältig ausgewählt bzw. ermittelt werden, um darauf aufbauend gegebenenfalls die Schaltung mit den kleinsten Zeitverzögerungen auszuwählen, oder Alternativschaltungen zu ermitteln bzw. einzusetzen, um sicherzustellen, dass das Ergebnis der Berechnung korrekt ist bzw. dem tatsächlichen Ergebnis möglichst nahekommt.

Nach einem Aspekt kann als Grundlage für das Entscheiden bzgl. der Relevanz der ermittelten Zeitverzögerung eine charakteristische Frequenz $f_{op}$, mit der die Rechenschaltung operiert, zu Grunde gelegt werden, um daraus eine charakteristische Zeitskala $tc$ zu ermitteln, auf der die Dynamik mindestens einer Rechenoperation stattfindet. Bei der Rechenschaltung kann es sich insbesondere um die Rechenschaltung einer Analogrecheneinrichtung, weiter insbesondere um die Rechenschaltung einer analog-digitalen Hybridrecheneinrichtung handeln. Weiter insbesondere kann es sich -hier und an anderer Stelle- insbesondere bei der Rechenschaltung um eine Analogrecheneinrichtung, weiter insbesondere um eine analog-digitale Hybridrecheneinrichtung, handeln.

Das beschriebene Verfahren kann zur Ermittlung einer Alternativschaltung ausgebildet sein, um den Einfluss zeitverzögerter Terme in Rechenschaltungen zu reduzieren. Die Schritte beinhalten insbesondere das Ermitteln von Zeitverzögerungen von Signalen in einer Rechenschaltung und das Ermitteln einer Alternativschaltung in der Rechenschaltung, um diese Zeitverzögerungen zu reduzieren. Als Grundlage für das Entscheiden bzgl. der Relevanz der ermittelten Zeitverzögerung kann eine Frequenz $f_{op}$ verwendet werden, um eine charakteristische Zeitskala $tc$ zu ermitteln. Die charakteristische Zeitskala $tc$ beschreibt insbesondere den zeitlichen Verlauf der Dynamik mindestens einer Rechenoperation durch die Rechenschaltung.

Das Ermitteln einer charakteristischen Zeitskala $tc$ ermöglicht es, eine Größe zu ermitteln, um festzustellen, ob eine Neukonfiguration der Analogschaltung notwendig bzw. erforderlich ist, um die Zeitverzögerungen in der Rechenschaltung zu reduzieren. Diese Größe kann dann zur Vorplanung und Speicherung von Varianten der Alternativschaltungen in einer Datenbank verwendet werden. Diese Datenbank bzw. Teile dieser Datenbank können in einem elektronischen Signal ausgelesen, gespeichert oder weiterverarbeitet werden. Insbesondere kann -alternativ oder zusätzlich- für eine gegebene Architektur des analog- oder analog-digital Hybridrechners (d.h., räumlich Anordnung der Rechenelemente) eine Datenbank der konfigurierten Schaltungen angelegt sein, für die die charakteristische Zeitskala größer als die Zeitverzögerungen sind. Auf die in der Datenbank -insbesondere auch als elektronisches Signal bzw. durch ein elektronisches Signal- abgelegten konfigurierten Schaltungen kann in Zukunft wieder zugegriffen werden, um schneller die gewünschte Schaltung konfigurieren zu können.

Nach einem unabhängigen Aspekt kann ein Verfahren zur mindestens teilweisen Reduktion von mindestens einer Zeitverzögerung ausgebildet sein. Das Verfahren kann den Schritt eines mindestens teilweise Reduzierens mindestens einer Zeitverzögerung aufweisen. Die Zeitverzögerung kann insbesondere aus einem Verfahren zur Ermittlung einer Alternativschaltung, insbesondere zur Reduktion des Einflusses zeitverzögerter Terme in Rechenschaltungen, wie es an anderer Stelle beschrieben ist, ermittelt werden. Dabei kann eine Alternativschaltung ausgebildet werden. Alternativ oder zusätzlich kann eine Alternativschaltung verwendet werden. Die Alternativschaltung kann dabei mittels eines Verfahrens ermittelt werden, wie es an anderer Stelle beschrieben ist.

Insbesondere gilt es ein mathematisches Problem lösen zu können, das mit, aber auch ohne zeitverzögerte Terme auftreten kann. Dabei kann beispielsweise mindestens eine Differentialgleichung zu lösen sein, die auch zeitabhängige Terme ohne explizite Zeitverzögerung aufweist, die durch eine Zeitverzögerung in der Analogieschaltung verfälscht werden könnten, wodurch eine falsche Differentialgleichung gelöst werden könnte, ohne entsprechende Reduktion der Zeitverzögerung. Das mindestens teilweise Reduzieren mindestens einer Zeitverzögerung beschreibt insbesondere den Prozess, bei dem eine Zeitverzögerung mittels einer Alternativschaltung mindestens teilweise korrigiert wird. Dies geschieht, insbesondere indem die Zeitverzögerung auf eine Zeitskala korrigiert werden kann, die der charakteristischen Zeitskala $tc$ entspricht, wodurch das richtige Problem gelöst werden kann, insbesondere wenn es darum geht, eine Differentialgleichung zu lösen.

Das mindestens teilweise Reduzieren mindestens einer Zeitverzögerung bezieht sich insbesondere darauf, dass die Verzögerung durch eine Schaltung reduziert wird, um das Signal in einem gewünschten Zeitintervall zu erhalten. Dies kann erreicht werden, indem etwa ein Teil eines Signals oder das ganze Signal nach seinem Entstehen oder nach seinem Empfangen über eine andere Route übermittelt werden kann und/oder über andere Bauteile übermittelt werden kann, auch ggf. mit anderen Bauteilen erzeugt werden kann, um die Zeitverzögerung zu reduzieren.

Beim Ausbilden einer Alternativschaltung wird eine Schaltung insbesondere als ein Schaltplan in einem elektronischen Signal hinterlegt, der dazu beitragen kann, die Zeitverzögerung zu reduzieren. Der Ausdruck den "Schaltplan in einem elektronischen Signal" zu hinterlegen kann insbesondere meinen, dass der Schaltplan z.B. digital auf einem Speicher, insbesondere wie er an anderer Stelle hierin beschrieben ist, gespeichert ist. Ein solcher Schaltplan kann dabei die entsprechende Alternativschaltung darstellen. Dies kann durch das Ansteuern von Komponenten einer Rechenschaltung erreicht werden, wie z.B. durch das Einstellen von Verzögerungszeiten auf bestimmten Komponenten oder durch ein Übermitteln über bestimmte Routen, etwa bei Vermeidung bestimmter Bauteile, um eine Zeitverzögerung anzupassen, an die Erfordernisse des spezifischen, zu lösenden Problems. Dabei kann aus einem Pool -etwa von Schaltplänen auf einer Datenbank - möglicher Verschaltungen die Schaltung ausgewählt werden, für die die Zeitverzögerungen keine signifikante Rolle spielen. Wird diese Schaltung gefunden, kann entsprechend rekonfiguriert werden, um diese Schaltung "aufzubauen", sprich zu implementieren.

Beim Verwenden einer Alternativschaltung kann die Schaltung, die etwa zuvor schon ermittelt worden ist, als eine passende Alternativschaltung in eine bestehende Rechenschaltung übertragen werden, um die Zeitverzögerung zu reduzieren. Dabei können die Steuersignale für die Alternativschaltung aus einer Datenbank oder Speichereinrichtung abgerufen werden, um die korrekte Reduktion der Zeitverzögerungen zu gewährleisten. Dabei kann auf diesem Abrufen ein elektronisches Signal bereitgestellt werden, das es ermöglicht eine entsprechende Alternativschaltung durch Ansteuerung von Komponenten der Rechenschaltung zu etablieren. Dabei kann als "Steuersignale für die Kompensationsschaltung" die Konfiguration für die Schaltung abgerufen werden.

Durch das hier beschriebene Verfahren wird es möglich, eine Zeitverzögerung insbesondere auf eine Zeitskala zu korrigieren, die auf einer Zeitskala liegt, die kleiner als die charakteristische Zeitskala ist, wodurch das richtige Problem gelöst werden kann, etwa in Bezug auf eine zu lösende Differentialgleichung.

Das Verfahren ermöglicht es, die Auswirkungen von zeitverzögerten Termen in Rechenschaltungen zu reduzieren und dabei eine Alternativschaltung (hier und an anderer Stelle auch: anders konfigurierte Schaltung) einzusetzen, um die Zeitverzögerungen zu reduzieren. Dies kann dazu beitragen, dass das Ergebnis der Berechnung korrekt ist und dass das zu lösende Problem richtig gelöst wird.

Nach einem Aspekt kann vorgesehen sein, dass die Alternativschaltung derart ermittelt wird - alternativ oder zusätzlich dass die Rechenschaltung derart angesteuert wird -, um die Konfiguration der Alternativschaltung so zu schalten, um mindestens eine Zeitverzögerung zu reduzieren - alternativ oder zusätzlich, um keine relevanten Zeitverzögerungen in ein äquivalentes mathematisches Modell einzuführen, das mit der zu konfigurierenden Rechenschaltung verbunden, insbesondere durch diese abgebildet, ist.

Die Reduktion des Einflusses zeitverzögerter Terme bezieht sich insbesondere darauf, dass die Auswirkungen von zeitverzögerten Signalen in einer Schaltung minimiert werden sollen, die sich als solche Terme in das zu lösende Problem integrieren bzw. in diesem als solche Terme manifestieren können. Diese Reduktion des Einflusses kann erreicht werden, indem eine Alternativschaltung verwendet wird, um die Zeitverzögerung zu reduzieren und so das richtige Problem zu lösen, wie an anderer Stelle beschrieben.

Ein mathematisches Modell ist insbesondere mit der konfigurierten Rechenschaltung verbunden, derart dass die Rechenschaltung dazu verwendet werden kann, um das mathematische Modell zu simulieren oder vorherzusagen. Diesem Modell sollten keine relevanten Zeitverzögerungen zugeführt werden, da dies zu Ungenauigkeiten bzw. zu Fehlern in der Berechnung bzw. in der Lösung führen kann. Ein mathematisches Modell kann ein zu lösendes Problem abbilden.

Die Gefahr eines solchen Fehlers kann insbesondere durch die beschriebenen Regeln reduziert bzw. ganz vermieden werden.

Nach einem Aspekt kann die Alternativschaltung basierend auf einem Set von Regeln ausgebildet werden. Alternativ oder zusätzlich kann die Alternativschaltung basierend auf einem Set von Regeln verwendet werden. Dabei kann das Set von Regeln mindestens eine Regel aufweisen, die aus den folgenden Regeln, ausgewählt sein kann. Gemäß einer Regel kann die Alternativschaltung so ermittelt oder so ausgebildet werden, dass minimal realisierbare Verzögerungen angesammelt werden können. Dadurch wird die Zeitverzögerung/werden die Zeitverzögerungen in der Analogieschaltung, die eingeführt wird/werden insbesondere minimiert. Bei der Zeitverzögerung handelt es sich insbesondere um die physische Zeitverzögerung in der Analogieschaltung. Alternativ oder zusätzlich kann nach einer Regel die Frequenz, mit der die analoge Berechnung durchführbar ist, unter Verwendung einer maximalen Verzögerung $\tau_{max}$ bestimmt werden, die insbesondere in der Schaltungskonfiguration der Alternativschaltung auftreten kann. Diese kann insbesondere durch $f_{op,max} \ll 1/\tau_{max}$ angegeben werden. Dieser Teil ist insbesondere folgendermaßen relevant: kann keine Alternativschaltung gefunden werden, in der die Zeitverzögerungen kleiner als $\tau_{max}$ und damit kleiner als die charakteristische Zeitskala sind, dann kann die Frequenz $f_{op}$ verringert werden, bis die Relation $f_{op,max} \ll 1/\tau_{max}$ erfüllt ist. Die Größe $f_{op,max}$ bezeichnet also insbesondere die maximale Frequenz mit der die Rechnung ausgeführt werden sollte, wenn ein gegebenes/gemessenes $\tau_{max}$ nicht durch die Anwendung des Sets von Regeln unterschritten werden kann.

Dabei kann ein Set von Regeln eine Gruppe von Regeln oder Vorschriften sein, die für die Ermittlung und/oder das Ausbilden einer Alternativschaltung verwendet werden können. In diesem Zusammenhang kann ein Set von Regeln beispielsweise folgende Regeln aufweisen, die zusammen oder aber auch gemeinsam erfüllt sein können. Die Alternativschaltung kann so ermittelt oder so ausgebildet werden, dass minimal realisierbare Verzögerungen angesammelt werden. Dies bedeutet insbesondere, dass die Alternativschaltung so konfiguriert wird, dass sie die geringste mögliche

Zeitverzögerung $\tau_{min}$ im System (etwa dem Analog- bzw. Analog-Digital-Hybridrechner) verursacht und $f_{op} \ll 1/\tau_{min}$ erfüllt sein kann. In Ausführungsformen kann f_op sowas wie die Bandbreite des Systems darstellen. Alternativ oder zusätzlich kann die Frequenz, mit der die analoge Berechnung durchführbar ist, unter Verwendung einer maximalen Verzögerung bestimmt werden, die in der Schaltungskonfiguration der Alternativschaltung auftritt. Diese kann insbesondere durch $f_{op} \ll 1/\tau_{min}$ angegeben werden. Dies bedeutet insbesondere, dass die Alternativschaltung so konfiguriert wird, dass sie eine mminimale Verzögerung in der Schaltung verursacht, die kleiner oder bedeutend kleiner dem Wert von $1/f_{op}$ ist, wobei $f_{op}$ die Frequenz darstellt, bei der die analoge Berechnung durchgeführt werden soll. Damit wird insbesondere gegeben, dass die Zeitverzögerung in einer Größenordnung der charakteristischen Zeitskala tc liegt. In anderen Worten ausgedrückt heißt das, dass die minimale Verzögerung $\tau_{min}$, die insbesondere in der Analogieschaltung auftritt, kleiner als die charakteristische Zeitskala tc sein soll, auf der die Rechnung abläuft - diese ist insbesondere gegeben durch $1/f_{op}$. Wenn durch die Minimierung der Zeitverzögerungen der Zustand nicht erreicht werden kann, dass die Zeitverzögerungen (bzw. deren Aufsummation) vernachlässigt werden könnten, dann kann die Operationsfrequenz derart angepasst werden, um das System zu einer Analogieberechnung zu bringen, um das richtige Problem lösen zu können. Dies kann insbesondere durch eine Anpassung der Operationsfrequenz in Form einer Reduzierung der Operationsfrequenz erfolgen.

Alternativ kann das $\tau_{max}$ derart minimiert werden, dass die Bedingung erfüllt werden kann, wonach die Operationsfrequenz wesentlich kleiner als das Inverse von $\tau_{max}$ sein kann.

Mit Hilfe dieses Sets von Regeln kann eine Alternativschaltung ermittelt und/oder ausgebildet werden, die in der Lage ist, eine mögliche maximale Verzögerung zu ermitteln, insbesondere derart, dass diese maximale Zeitverzögerung unterhalb einer Größenordnung der charakteristischen Zeitskala tc auf der die Dynamik der Rechnung liegt, um ein zu lösendes Problem zu berechnen. Das wird insbesondere dadurch erreicht, dass entweder eine Reduktion der maximalen Zeitverzögerung, und/oder dass eine Reduktion der Rechengeschwindigkeit, d.h., der Vergrößerung der charakteristischen Zeitskala tc der Rechnung erfolgt. Die charakteristische Zeitskala tc ist dabei insbesondere von der Rechenoperationszeit abzugrenzen. Der Begriff Rechenoperationszeit bezieht sich insbesondere auf die Zeit, die ein Analogcomputer benötigt, um eine Rechnung durchzuführen. Diese ist insbesondere verschieden von der charakteristischen Zeitskala tc der Dynamik der Rechnung.

Nach einem unabhängigen Aspekt kann eine Rechenschaltung vorgesehen sein. Dabei kann es sich insbesondere um eine Rechenschaltung einer Analogrecheneinrichtung handeln. Weiter insbesondere kann es sich um eine Recheneinrichtung einer analog-digitalen Hybridrecheneinrichtung handeln. Die Recheneinrichtung ist insbesondere ausgebildet und eingerichtet, um eines der Verfahren, wie sie an anderer Stelle hierin beschrieben sind, durchzuführen. Damit kann die Recheneinrichtung durch die Merkmale, Merkmalskombinationen, technischen Effekte und Vorteile beschrieben werden, wie sie im Zusammenhang mit den Verfahren beschrieben worden sind. Dies gilt entsprechend auch umgekehrt, weshalb hier auch über die Kategoriegrenzen hinweg Bezug genommen werden kann bzw. genommen wird, auf die unterschiedlichen beschriebenen Aspekte, ohne diese zu wiederholen, aus Gründen der Leserlichkeit und der Kompaktheit.

Nach einem unabhängigen Aspekt kann eine Recheneinrichtung ausgebildet sein. Dabei kann es sich insbesondere um eine volldigitale Recheneinrichtung handeln. Diese kann insbesondere ausgebildet und eingerichtet sein, um eines der an anderer Stelle beschriebenen Verfahren durchzuführen. Damit kann die Recheneinrichtung ausgebildet und eingerichtet sein, um eine Alternativschaltung zu ermitteln, insbesondere durch Simulation oder Berechnung von Zeitverzögerungen, etwa anhand eines digitalen Modells einer entsprechend zu simulierenden Rechenschaltung, in der eine Alternativschaltung ausgebildet werden soll, um das entsprechende Problem zu berechnen und/oder zu lösen.

Nach einem unabhängigen Aspekt kann vorgesehen sein, dass ein Computerprogrammprodukt ausgebildet und eingerichtet ist, um ein Verfahren durchzuführen, wie es an anderer Stelle beschrieben ist, wenn es auf einer Recheneinrichtung, wie an anderer Stelle beschrieben, ausgeführt wird. Alternativ oder zusätzlich kann dabei ein Computerprogrammprodukt ausgebildet und eingerichtet sein, um eine Rechenschaltung wie an anderer Stelle beschrieben nach einem Verfahren wie an anderer Stelle beschrieben anzupassen, insbesondere wenn es auf einer Rechenschaltung wie an anderer Stelle beschrieben und/oder einer Recheneinrichtung wie an anderer Stelle beschrieben ausgeführt wird.

Das Computerprogrammprodukt besteht insbesondere aus einem Softwarepaket, das eine Reihe von Algorithmen und Regeln aufweist, um ein Verfahren zur Konfiguration einer Alternativschaltung für Analogrechnerarchitekturen bzw. analog-digitale Hybridrechnerarchitekturen zu implementieren. Die Ausführungsformen des Programms können variieren, je nachdem, ob es auf einer Recheneinrichtung wie einem Computer oder einer speziellen Hardware ausgeführt wird, insbesondere auch in Bezug ob es auf einer Analogrechnerarchitektur bzw. analog-digitalen Hybridrechnerarchitektur auszuführen ist.

Das Computerprogrammprodukt kann konfiguriert werden, um eine bestimmte Schaltungskonfiguration zu ermitteln oder zu nutzen, die realisierbare bzw. potentiell auftretende Zeitverzögerungen minimiert und/oder eine maximale Verzögerung bestimmt, die in der Alternativschaltung auftritt, die unterhalb der Größenordnung der charakteristischen Zeitskala tc der Dynamik der Berechnung liegen kann. Die Regeln und/oder Algorithmen im Computerprogrammprodukt ermöglichen es, die optimale Schaltungskonfiguration für ein bestimmtes Problem zu finden und/oder anzupassen.

Wenn das Computerprogrammprodukt auf einer Recheneinrichtung ausgeführt wird, kann es in Form von ausführbaren Dateien oder als Teil eines Betriebssystems bereitgestellt werden. Wenn es auf einer speziellen Hardware ausgeführt wird, kann es als Firmware oder als Teil eines Gesamtsystems implementiert sein.

Dabei ermöglicht das Computerprogrammprodukt eine effiziente und präzise Konfiguration von Alternativschaltungen für Analogrechnerarchitekturen bzw. für analog-digitale Hybridrechnerarchitekturen, um Zeitverzögerungen von Signalen für ein Berechnen zu minimieren oder zu bestimmen, um so eine entsprechend richtige Lösung zu finden.

Nach einem unabhängigen Aspekt kann eine Analogrecheneinrichtung oder eine analog-digitale Hybridrecheneinrichtung ausgebildet sein, die mindestens eine Rechenschaltung, wie an anderer Stelle hierin beschrieben, aufweist, ausgebildet, um mittels einer Alternativschaltung angepasst zu werden, insbesondere mittels eines Verfahrens, wie an anderer Stelle hierin beschrieben.

Bei der Konfiguration einer Analogrechnerarchitektur bzw. analog-digitalen Hybridrechnerarchitektur kann die Rechenschaltung so konfiguriert werden, dass Zeitverzögerungen von Signalen die Eigenschaften eines zu berechnenden mathematischen Problems nicht verändern. Dazu kann eine Alternativschaltung eingesetzt werden, um die Auswirkungen von Zeitverzögerungen zu reduzieren. Diese Alternativschaltung wird dabei insbesondere so angepasst, dass sie die Verzögerung in einem bestimmten Bereich reduzieren und dadurch die Genauigkeit der Berechnungen verbessern kann.

Neben der analog-digitalen Hybridrechnerarchitekturen, bei denen Analogsignale in digitale Signale umgewandelt werden können, können auch digital-analoge Hybridrechnerarchitekturen vorgesehen sein, bei denen ein digitales in ein analoges Signal umgesetzt werden kann, um die Rechenprobleme zu verarbeiten. Hier und an anderer Stelle wird insbesondere nicht zwischen diesen Arten der Rechenarchitekturen unterschieden in Bezug auf die durch die Vorrichtungen und/oder die Systeme zu lösende Aufgabe. Es kann also jeweils nur eine oder auch beide Formen referenziert sein.

Nach einem unabhängigen Aspekt kann eine Speichereinrichtung ausgebildet und eingerichtet sein, um ein Computerprogrammprodukt, wie es an anderer Stelle hierin beschrieben ist, zu halten, insbesondere ausgebildet und eingerichtet, um durch eine Rechenschaltung, wie sie an anderer Stelle hierin beschrieben ist, durch eine Recheneinrichtung, wie sie an anderer Stelle hierin beschrieben ist, durch eine analoge Recheneinrichtung, wie sie an anderer Stelle hierin beschrieben ist, und/oder durch eine analog-digitale Hybridrecheneinrichtung, wie sie an anderer Stelle hierin beschrieben ist, ausgelesen zu werden.

Eine Speichereinrichtung, kann dazu ausgelegt sein, ein Computerprogrammprodukt wie das an anderer Stelle hierin beschriebene zu halten. Dazu ist insbesondere eine ausreichende Speicherkapazität vorgesehen, um das Programm und alle notwendigen Dateien und Ressourcen aufzubereiten und zu halten. Dabei kann insbesondere vorgesehen sein, dass Alternativschaltungspläne, Steuerbefehle, Schemata, Zeitabläufe und Zeitverzögerungskonstanten einzeln oder auch in jeder denkbaren Kombination von einer Speichereinrichtung gehalten werden können, Insbesondere in einer oder in mehreren Datenbanken. Zudem kann die Speichereinrichtung über eine entsprechend schnelle und zuverlässige Verbindung zur Recheneinrichtung verfügen, um ggf. ein ununterbrochenes Datenaustauschgeschehen zu gewährleisten. Dies kann insbesondere dann vorgesehen sein, wenn für unterschiedliche Probleme, die etwa in einer Rechenschaltung gelöst werden sollen, neue Alternativschaltungen vorgesehen, insbesondere ermittelt oder geladen werden sollen.

Die Speichereinrichtung kann darauf ausgelegt sein, verschiedene Arten von Recheneinrichtungen wie Computer, spezielle Hardware oder analoge/analog-digitale (Hybrid-)Rechnerarchitekturen anzusprechen. Dafür kann die Unterstützung verschiedener Kommunikationsprotokolle und Datenformate vorgesehen sein.

Die Speichereinrichtung kann so konfiguriert sein, um ein an anderer Stelle beschriebenes Computerprogrammprodukt zu installieren, aufzurufen und zu verwalten, Insbesondere unabhängig davon, welche Art von Recheneinrichtung angesteuert oder verwendet wird.

Nach einem unabhängigen Aspekt kann ein elektronisches Signal mindestens eines von mindestens einer Zeitverzögerung, ermittelt nach einem Verfahren, wie es an anderer Stelle hierin beschrieben ist, einer Information über eine Alternativschaltung, ermittelt nach einem Verfahren, wie es an anderer Stelle hierin beschrieben ist, oder mindestens eines Steuerungsbefehls zur Schaltung einer Recheneinrichtung und/oder einer Rechenschaltung, wie sie an anderer Stelle hierin beschrieben ist/sind, aufweisen, insbesondere um die Alternativschaltung gemäß einem Verfahren, wie sie an anderer Stelle hierin beschrieben ist, auszubilden und/oder zu verwenden.

Eine Ausführungsform der Erfindung wird in der Figur gezeigt und im Folgenden ausführlicher erläutert. Es wird gezeigt in:

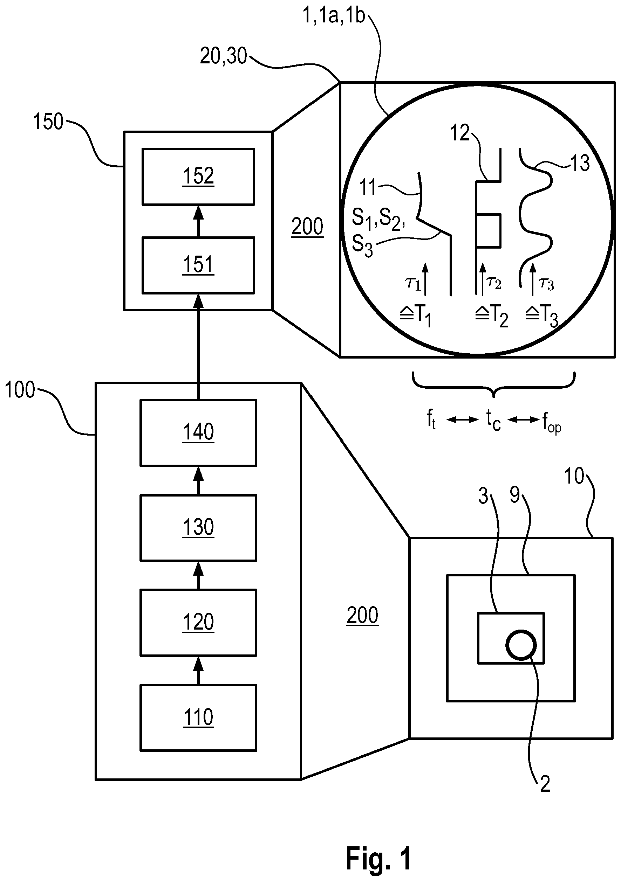

Fig. 1 eine exemplarische Ausführungsform eines Verfahrens, das auf einer Recheneinrichtung ausgeführt wird, um eine Alternativschaltung in einer Rechenschaltung auszuführen.

Die Fig. 1 enthält vereinfachte, schematische Darstellungen. In einigen Fällen können identische Bezugszeichen für gleiche oder ähnliche, aber möglicherweise nicht identische Elemente verwendet werden. Unterschiedliche Ansichten der gleichen Elemente können unterschiedlich skaliert werden. Anweisungen wie "links", "rechts", "oben" und "unten" sind in Bezug auf die jeweilige Figur zu verstehen und können in den einzelnen Darstellungen im Vergleich zum abgebildeten Objekt variieren.

Fig. 1 zeigt eine exemplarische Ausführungsform eines Verfahrens 100, das auf einer Recheneinrichtung 10 ausgeführt wird, um eine Alternativschaltung 5 in einer Rechenschaltung 1 auszuführen.

Bei der hier dargestellten und im folgenden beschriebenen Ausführungsform handelt es sich um ein Beispiel. Für einen Analogrechner 20 oder einen hybriden analog-digital Rechner 30 kann es als Analogienrechenmaschine von Bedeutung sein, dass die Rechenschaltung 1, das Rechenproblem korrekt darstellt. Treten etwa Zeitverzögerungen $\tau 1$, $\tau 2, \tau 3$ in den analogen Rechenschaltungen 1 (hier mit Rechenelemente 11, 12, 13 simplifiziert dargestellt) auf, die z.B. statt der zu lösenden gewöhnlichen Differentialgleichungen eine zeitverzögerte Differentialgleichung erzeugen, dann können beispielsweise keine korrekten Lösungen erreicht werden.

Die hier beschriebene Ausführungsform zeigt dabei auf, wie Lösungen gefunden werden können, insbesondere wenn die Operationsgeschwindigkeit von analogen Rechenschaltungen 1, hier mit Rechenelemente 11, 12, 13 dargestellt, oder deren räumliche Ausdehnung eine bestimmte Dimension annehmen.

Die hier beschriebene Ausführungsform beschreibt ein Beispiel diese Zeitverzögerungen $\tau 1$, $\tau 2$, $\tau 3$ zu adres-sieren und zeigt auf, wie diese detektiert, in Bezug auf Ihren Einfluss eingeordnet und durch gezieltes Routing verringert, insbesondere ganz verhindert, oder zumindest ausreichend reduziert werden können.

In einem ersten Schritt 110 können die, in der zu konfigurierenden Rechenschaltung 1, auftretenden Zeitverzö-gerungen $\tau 1$, $\tau 2$, $\tau 3$ approximiert oder gemessen werden. Anhand dieser Information kann entschieden werden, ob die Zeitverzögerungen $\tau 1$, $\tau 2$, $\tau 3$ für die zu implementierende Analogienrechnung vernachlässigbar sind oder nicht. Dies geschieht beispielsweise, indem man die Frequenz $f_{op}$, mit der etwa der Analogrechner 20 operiert, zu Grunde legt und daraus die charakteristische Zeitskala $tc$, auf der die Dynamik der Rechnung, die von der Rechenschaltung 1 durchgeführt werden soll, stattfindet, bestimmt. Diese berechnet sich insbesondere aus der Frequenz $f_{op}$ wie folgt

$$tc = 1/f_{op} \qquad [5]$$

Eine Zeitverzögerung $\tau$ ist insbesondere dann vernachlässigbar, wenn diese viel kleiner ist als die charakteristische Zeitskala $tc$, also wenn gilt $\tau \ll tc$. Andernfalls können die Zeitverzögerungen $\tau 1$, $\tau 2$, $\tau 3$ zu Effekten wie Multistabilitäten, abweichenden Frequenzen in periodischen Lösungen gekoppelter Systeme und anderer durch die Nichtlinearität bedingter Phänomene kommen. Die charakteristische Zeitskala $tc$, wie sie in Formel [5] angegeben ist, bestimmt also insbesondere welche Zeitverzögerungen $\tau 1$, $\tau 2$, $\tau 3$ eine Rolle für die Rechnung spielen können und insbesondere nicht vernachlässigt werden können. Eine Zeitverzögerung definiert insbesondere gleichermaßen eine charakteristische Frequenz

$$f\tau = \tau^{\wedge}(-1). \qquad [6]$$

Als exemplarisches Beispiel kann für einen oberen Bereich einer Operationsfrequenz von circa

$$f_{op,\text{example}} \approx 100\text{kHz} \quad [7]$$

einer charakteristischen Zeitskala

$$tc = 10\text{µs} \qquad [8]$$

entsprechen. Das heißt, dass Zeitverzögerungen $\tau 1$, $\tau 2$, $\tau 3$ von einigen 100 ns im Beispiel keine signifikante Rolle spielen können. Für Analog- und Analog-DigitalRechner, die bei höheren Frequenzen operieren können, oder über große räumliche Distanzen verteilt sind, kann diese Analyse und die zu erwartenden Zeitverzögerungen $\tau 1$, $\tau 2$, $\tau 3$ signifikant anders ausfallen. Hier wird exemplarisch gezeigt, dass ein Routing der Signale s1, s2, s3 über das Rechenelement 11 geführt wird, da bei diesem die Zeitverzögerung $\tau 1$ zu vernachlässigen ist.

Wenn also ein mathematisches Problem ohne explizite Zeitverzögerungsterme an dem Analogrechner 20 abgebildet werden soll, können physische, also real auftretende Zeitverzögerungen, die in der das mathematische Problem analog abbildenden Rechenschaltung durch eine geschickte Verschaltung der Rechenelemente 11, 12, 13 vermieden werden. In anderen Worten ausgedrückt heißt das, dass es hier nicht darum geht, mathematische Zeitverzögerungsterme T1, T2, T3 zu vermeiden, da diese (nichtvorhandene) Terme in der abzubildenden Gleichung wären, die auf dem Analogrechner gerechnet werden sollen. Vielmehr dient das entsprechende Verschalten der Rechenelemente insbesondere dazu, dass in der Analogieschaltung/Rechenschaltung keine signifikanten (Signallauf-)Zeitverzögerungen auftreten, d.h. nicht die mathematischen Zeitverzögerungsterme T1, T2, T3 sollen vermieden werden - die sind ja sowieso nicht in der Problemstellung - sondern die Analogieschaltung soll keine relevanten Zeitverzögerungen enthalten, die im Umkehrschluss ein mathematisches Problem mit entsprechenden Zeitverzögerungstermen analog abbilden würde, nicht das eigentliche Problem. Alternativ oder zusätzlich kann eine Routenauswahl, ein sog. Routing, durchgeführt werden. Diese Rechenelemente 11, 12, 13 sind hier lediglich aus Gründen der Einfachheit als reine Leiterbahnen dargestellt, können aber deutlich komplexere Verschaltungen und/oder Bauteile aufweisen, etwa auch Delays zur Einführung von (relativen) Verzögerungen. Spezielle Regeln und Algorithmen für ein Routing können zwischen den Rechenelementen 11, 12, 13 durch einen Software-Stack als Computerprogrammprodukt 3, der die Synthese der Rechenschaltung 1 vornimmt 140, implementiert werden. Diese können sicherstellen, dass in der konfigurierten Rechenschaltung 1a keine Zeitverzögerungen $\tau1$, $\tau2$, $\tau3$ auftreten, die von derselben Größenordnung wie die charakteristische Zeitskala tc sind.

Dazu kann ein Modell 2 einer realen Rechenschaltung 1 als Teil eines Computerprogrammprodukts 3 auf einer Speichereinrichtung 9 vorliegen, ausgebildet und eingerichtet, um ein Verfahren 100 wie beschrieben durchzuführen.

Das Verfahren 100 weist also insbesondere den Schritt eines Ermittelns 110 von (physikalisch messbaren) Zeitverzögerungen $\tau1$, $\tau2$, $\tau3$ von Signalen S1, S2, S3 in einer Rechenschaltung 1 auf, wobei die Zeitverzögerungen $\tau1$, $\tau2$, $\tau3$ durch den Lauf der Signale S1, S2, S3 in den Leiterbahnen und in den Rechenelementen 11, 12, 13 selbst sich ansammeln können, insbesondere vereinzelt oder auch in Summen voneinander.

Das Verfahren 100 weist insbesondere den Schritt eines Ermittelns 130 einer Alternativschaltung 5 in der Rechenschaltung 1 auf, insbesondere derart, um (physikalisch messbare) Zeitverzögerungen $\tau1$, $\tau2$, $\tau3$ zu reduzieren, um Zeitverzögerungsterme T1, T2, T3 zu reduzieren, insbesondere ganz zu unterdrücken. Die Zeitverzögerungsterme T1, T2, T3 stellen dabei insbesondere unerwünschte Terme in der mathematischen Beschreibung (auch als Modellierung zu bezeichnen) der Analogieschaltung dar, die das zu lösende mathematische Problem lösen sollte, aber ggf. durch die physikalisch (messbaren) Zeitverzögerungen $\tau1$, $\tau2$, $\tau3$ dazu führen, dass die Problemstellung nicht korrekt abgebildet werden kann. Vielmehr kann eine andere mathematische Beschreibung der fälschlicherweise implementierten Analogieschaltung ein anderes mathematisches Problem abbilden. Dabei können die Zeitverzögerungsterme T1, T2, T3 mindestens teilweise reduziert werden, bzw. die Zeitverzögerungen $\tau1$, $\tau2$, $\tau3$ können insbesondere teilweise reduziert werden. Hier ist ein vereinfachtes Ausführungsbeispiel schematisch und exemplarisch dargestellt, bei der eine Alternativschaltung 5 einer Rechenschaltung 1 nur die Rechenelemente 12, 13 der Rechenschaltung 1 einschließt, da die zu berechnende mathematische Aufgabe ohne das Rechenelement 11 darstellbar ist und/oder wobei das Rechenelement 11 eine zu starke Zeitverzögerung $\tau1$ durch Zeitverzögerungsterm T1 akkumulieren würde, wodurch die zeitabhängige mathematische Aufgabe falsch abgebildet würde und damit zum falschen Ergebnis führen könnte, im schlimmsten Fall sogar zur Lösung der falschen mathematischen Aufgabe, wie beispielsweise der Lösung einer falschen Differentialgleichung. Die Alternativschaltung 5 kann in diesem Zusammenhang auch als umkonfigurierte Rechenschaltung 1b gegenüber der konfigurierten Rechenschaltung 1a bezeichnet werden, wobei letztere in diesem Beispiel alle Rechenelement 11, 12, 13 aufweist.

Das Verfahren kann dabei insbesondere den Schritt 120 eines Entscheidens bzgl. der Relevanz der ermittelten Zeitverzögerungen $\tau1$, $\tau2$, $\tau3$ für eine Rechenoperation der Rechenschaltung 1 aufweisen, um zu entscheiden, ob das Ermitteln 130 einer Alternativschaltung 5 durchzuführen ist. Sollte dies der Fall sein, dann kann in einem Verfahren 150 in einem Schritt 151 ein Reduzieren der Zeitverzögerungen $\tau1$, $\tau2$, $\tau3$ - mindestens teilweise - durchgeführt werden, um dadurch insbesondere verhindern zu können, dass dies Zeitverzögerungen als Zeitverzögerungsterme T1, T2, T3 eine mathematische Beschreibung der Analogierechnung darstellen würden, die nicht das zu lösende mathematische Problem darstellen würden. Daher können die physischen Zeitverzögerungen zu unterdrücken sein, insbesondere indem die Zeitverzögerungen $\tau1$, $\tau2$, $\tau3$ die Bedingung $f_{op,max} \ll 1/\tau_{max}$ erfüllen können. Dies kann durch einen Schritt eines Verwendens 152 bzw. eines Ausbilders 153 einer Alternativschaltung 5 erfolgen.

Insbesondere beziehen sich die Begriffe "kann" oder "kann" auf optionale Merkmale der Erfindung. Folglich gibt es auch weitere Aspekte und/oder Ausführungsformen der Erfindung, die zusätzlich oder alternativ das jeweilige Merkmal oder die jeweiligen Merkmale aufweisen. Alle Merkmale in Feature-Kombinationen werden auch unabhängig davon offengelegt und können auch aus den hier offenbarten Kombinationen von Merkmalen herausgegriffen und in Kombination mit anderen Merkmalen verwendet werden, um den Gegenstand eines der Ansprüche zu spezifizieren, wobei jede strukturelle und/oder funktionale Beziehung, die zwischen den Merkmalen bestehen kann, aufgelöst wird. Begriffe wie "erste", "zweite", "dritte" können verwendet werden, um sich auf eine Liste von Elementen zu beziehen, beschreiben diese Merkmale oder Elemente jedoch nicht unbedingt nach ihrer Bedeutung, ihrer Reihenfolge des Aussehens oder der Reihenfolge der Struktur. Daher können diese Elemente oder Merkmale die verschiedenen Aspekte in einer anderen bestimmten Reihenfolge angeben, sofern nicht ausdrücklich anders angegeben.

BEZUGSZEICHENLISTE

| | |
|---|---|
| 1 | Rechenschaltung |
| 1a | umkonfigurierte Rechenschaltung |
| 1b | konfigurierte Rechenschaltung |
| 2 | Modell |
| 3 | Computerprogrammprodukt |
| 5 | Alternativschaltung |
| 11, 12, 13 | Rechenelemente |
| 9 | Speichereinrichtung |
| 10 | Digitalrechner |
| 20 | Analogrechner |
| 30 | Hybridrechner |
| 100 | Verfahren |
| 110 | Ermitteln von Zeitverzögerungen |
| 120 | Entscheiden über eine Relevanz für ein Ermitteln einer Alternativschaltung |
| 130 | Ermitteln einer Alternativschaltung |
| 140 | Implementieren einer Rechenschaltung |
| 200 | elektronisches Signal |
| $f_{op}$ | Operationsfrequenz |
| $tc$ | charakteristische Zeitskala |
| $f_\tau$ | charakteristische Frequenz |
| $\tau1, \tau2, \tau3$ | Zeitverzögerungen |
| T1, T2, T3 | Zeitverzögerungsterme |

**Patentansprüche**

1. Verfahren (100), insbesondere computer-implementiert, zur Ermittlung (130) einer Alternativschaltung (5), insbesondere zur Reduktion des Einflusses zeitverzögerter Terme (T1, T2, T3) in Rechenschaltungen (1), insbesondere in Rechenschaltungen (1) für das Lösen von Differentialgleichungen, aufweisend die Schritte:

   • eines Ermittelns (110) von Zeitverzögerungen ($\tau1$, $\tau2$, $\tau3$) von Signalen (s1, s2, s3) in einer Rechenschaltung (1);
   • eines Ermittelns (130) einer Alternativschaltung (5) in der Rechenschaltung (1) derart, um Zeitverzögerungen ($\tau1$, $\tau2$, $\tau3$) zu reduzieren.

2. Verfahren (100) nach Anspruch 1, aufweisend den Schritt (120) eines Entscheidens bzgl. der Relevanz der ermittelten Zeitverzögerungen ($\tau1$, $\tau2$, $\tau3$) für eine Rechenoperation der Rechenschaltung (1), um zu entscheiden, ob das Ermitteln (130) einer Alternativschaltung (5) durchzuführen ist.

3. Verfahren (100) nach einem der Ansprüche 1 oder 2, wobei das Ermitteln (110) von Zeitverzögerungen ($\tau1$, $\tau2$, $\tau3$) mindestens eines von einem Approximieren, einem Berechnen oder einem Messen aufweist.

4. Verfahren (100) nach einem der voranstehenden Ansprüche, wobei als Grundlage für das Entscheiden (120) bzgl. der Relevanz der ermittelten Zeitverzögerung ($\tau1$, $\tau2$, $\tau3$) eine Frequenz ($f_{op}$), mit der die Rechenschaltung (1), insbesondere einer Analogrecheneinrichtung (20), weiter insbesondere eine analog-digitale Hybridrecheneinrichtung (30), operiert, zu Grunde gelegt wird, um daraus eine charakteristische Zeitskala (tc) zu ermitteln, auf der die Dynamik mindestens einer Rechenoperation stattfindet.

5. Verfahren (150) zur mindestens teilweisen Reduktion von mindestens einer Zeitverzögerung ($\tau1$, $\tau2$, $\tau3$), aufweisend den Schritt eines mindestens teilweise Reduzierens (151) mindestens einer Zeitverzögerung ($\tau1$, $\tau2$, $\tau3$), insbesondere ermittelt aus einem Verfahren (100) nach einem der voranstehenden Ansprüche, mittels eines Ausbildens und/oder eines Verwendens einer Alternativschaltung (5) ermittelt mittels eines Verfahrens (100) nach einem der voranstehenden Ansprüche.

6. Verfahren (100, 150) nach einem der voranstehenden Ansprüche, insbesondere nach Anspruch 5, wobei die Alternativschaltung (5) derart ermittelt wird und/oder wobei die Rechenschaltung (1) derart angesteuert wird, um die Konfiguration der Alternativschaltung (5) so zu schalten, um mindestens eine Zeitverzögerung ($\tau1$, $\tau2$, $\tau3$) zu reduzieren und/oder um keine relevanten Zeitverzögerungen ($\tau1$, $\tau2$, $\tau3$) in ein äquivalentes mathematisches Modell (2) einzuführen, das mit der zu konfigurierenden Rechenschaltung (1) verbunden, insbesondere durch diese abgebildet, ist.

7. Verfahren (100, 150) nach einem der voranstehenden Ansprüche, insbesondere nach einem der Ansprüche 5 oder 6, wobei die Alternativschaltung (5) basierend auf einem Set von Regeln ausgebildet und/oder verwendet wird, wobei das Set von Regeln mindestens eine Regel, ausgewählt aus den folgenden Regeln aufweist:

• die Alternativschaltung (5) wird so ermittelt oder so ausgebildet, dass minimal realisierbare Verzögerungen angesammelt werden; oder
• die Frequenz, mit der die analoge Berechnung durchführbar ist, wird unter Verwendung einer maximalen Verzögerung bestimmt, die in der Schaltungskonfiguration der Alternativschaltung auftritt, insbesondere durch $f_{op,max} \ll 1/\tau_{max}$ angegeben.

8. Rechenschaltung (1), insbesondere einer Analogrecheneinrichtung (20), weiter insbesondere einer analog-digitalen Hybridrecheneinrichtung (30), ausgebildet und eingerichtet, um ein Verfahren (100, 150) nach einem der voranstehenden Ansprüche, insbesondere nach einem der Ansprüche 5 bis 7, durchzuführen.

9. Recheneinrichtung, insbesondere volldigitale Recheneinrichtung (10), ausgebildet und eingerichtet, um ein Verfahren (100) nach einem der Ansprüche 1 bis 4 durchzuführen.

10. Computerprogrammprodukt (3) ausgebildet und eingerichtet, um ein Verfahren (100, 150) nach einem der Ansprüche 1 bis 7 durchzuführen, insbesondere wenn es auf einer Recheneinrichtung nach Anspruch 9 ausgeführt wird; und/oder Computerprogrammprodukt (3) ausgebildet und eingerichtet, um eine Rechenschaltung (1) nach Anspruch 8 nach einem Verfahren (150) gemäß einem der Ansprüche 5 bis 7 anzupassen, insbesondere wenn es auf einer Rechenschaltung (1) nach Anspruch 8 und/oder einer Recheneinrichtung nach Anspruch 9 ausgeführt wird.

11. Analoge Recheneinrichtung (20) oder analog-digitale Hybridrecheneinrichtung (30) aufweisend mindestens eine Rechenschaltung (1) nach Anspruch 8, ausgebildet, um mittels einer Alternativschaltung (5) angepasst zu werden gemäß einem Verfahren (150) nach einem der Ansprüche 5 bis 7.

12. Speichereinrichtung (9) ausgebildet und eingerichtet, um ein Computerprogrammprodukt (3) nach Anspruch 10 zu halten, insbesondere ausgebildet und eingerichtet, um durch eine Rechenschaltung (1) nach Anspruch 8, durch eine Recheneinrichtung nach Anspruch 9, durch eine analoge Recheneinrichtung (20) nach Anspruch 11 und/oder durch eine analog-digitale Hybridrecheneinrichtung (30) nach Anspruch 11 ausgelesen zu werden.

13. Elektronisches Signal (200), aufweisend mindestens eines von mindestens einer Zeitverzögerung ($\tau 1$, $\tau 2$, $\tau 3$), ermittelt nach einem Verfahren (100, 150) nach einem der Ansprüche 1 bis 7, einer Information über eine Alternativschaltung (5) ermittelt nach einem Verfahren (100, 150) nach einem der Ansprüche 1 bis 7, oder mindestens eines Steuerungsbefehls zur Schaltung einer Rechenschaltung (1) nach Anspruch 8, um die Alternativschaltung (1) gemäß einem Verfahren (150) nach einem der Ansprüche 5 bis 7 auszubilden und/oder zu verwenden.

**Fig. 1**

Europäisches
Patentamt

European
Patent Office

Office européen
des brevets

# EUROPÄISCHER RECHERCHENBERICHT

**Nummer der Anmeldung**

EP 24 17 3472

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/261523 A1 (ZHANG FAN [US] ET AL) 18. August 2022 (2022-08-18) * Absatz [0035] - Absatz [0048]; Abbildungen 5, 6 * ----- | 1-13 | INV. G06F7/544 G06F30/337 |
| X | US 5 426 591 A (GINETTI ARNOLD [US] ET AL) 20. Juni 1995 (1995-06-20) * Spalte 7, Zeile 40 - Spalte 11, Zeile 57 * ----- | 1-13 | |
| X | US 2019/228126 A1 (OH NAHMSUK [US]) 25. Juli 2019 (2019-07-25) * Absatz [0031] - Absatz [0037]; Abbildungen 1, 4A, 4B * ----- | 1-13 | |

**RECHERCHIERTE SACHGEBIETE (IPC)**

G06F

Der vorliegende Recherchenbericht wurde für alle Patentansprüche erstellt

| Recherchenort | Abschlußdatum der Recherche | Prüfer |
|---|---|---|
| München | 8. Oktober 2024 | Tenbieg, Christoph |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

# EP 4 645 065 A1

## ANHANG ZUM EUROPÄISCHEN RECHERCHENBERICHT
## ÜBER DIE EUROPÄISCHE PATENTANMELDUNG NR.

EP 24 17 3472

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-2024

| Im Recherchenbericht angeführtes Patentdokument | Datum der Veröffentlichung | Mitglied(er) der Patentfamilie | Datum der Veröffentlichung |
|---|---|---|---|
| US 2022261523 A1 | 18-08-2022 | US 2022261523 A1<br>WO 2022177729 A1 | 18-08-2022<br>25-08-2022 |
| US 5426591 A | 20-06-1995 | KEINE | |
| US 2019228126 A1 | 25-07-2019 | CN 111902819 A<br>EP 3740887 A2<br>US 2019228126 A1<br>WO 2019143661 A2 | 06-11-2020<br>25-11-2020<br>25-07-2019<br>25-07-2019 |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5237514 A
- US 7804760 B2
- US 7336729 B2